# EUROPEAN PATENT APPLICATION

(11) **EP 4 664 874 A1**
(43) Date of publication of application: **17.12.2025**
(21) Application number: 23921237.6
(22) Date of filing: 20.06.2023
(51) Int. Cl.: H04N 7/18, B60R 1/04, B60R 1/20, B60R 1/26, B60R 1/29

(54) **DISPLAY CONTROL SYSTEM, ELECTRONIC MIRROR, METHOD FOR CONTROLLING DISPLAY CONTROL SYSTEM, AND PROGRAM**

(30) Priority: 10.02.2023 JP 2023018901
(71) Applicant: Pioneer Corporation, Tokyo 113-0021 (JP)
(72) Inventor: KAWATA, Ayumu, Kawagoe-shi, Saitama 350-8555 (JP); TANIZAWA, Yusuke, Kawagoe-shi, Saitama 350-8555 (JP)
(74) Representative: Vossius & Partner Patentanwälte Rechtsanwälte mbB
(86) International application number: PCT/JP2023/022832
(87) International publication number: WO 2024/166410

(57) **Abstract**

A display control system (100) includes a first imaging unit (20), a second imaging unit (30), a display unit (10), and a display control unit (41). A first imaging unit (20) images a rear side of a mobile body. A second imaging unit (30) images the inside of the mobile body. The display unit (10) is located at a position visually recognizable to a driver of the mobile body. A display control unit (41) displays at least one of a first image (21) generated by using a first imaging unit (20) or a second image (31) generated by using a second imaging unit (30) on a display unit (10). A display control unit (41) changes a display aspect of at least one of the first image (21) or the second image (31) according to a predetermined state, and displays both the first image (21) and the second image (31) on a display unit (10) in a case where the predetermined state satisfies a first condition.

## Description

### TECHNICAL FIELD

The present invention relates to a display control system, an electronic mirror, a method for controlling a display control system, and a program.

### BACKGROUND ART

Patent Document 1 discloses an in-vehicle conversation support device that can realize a smooth conversation between a front seat occupant and a rear seat occupant.

Patent Document 2 discloses an electronic mirror system in which a function of a device can be sufficiently utilized.

Patent Document 3 discloses an electronic mirror device applied to a room mirror, in which significant information can be presented to an occupant at a stop and safety can be improved.

Patent Document 4 discloses a rear electronic mirror and a control system that make it easy to check the rear side.

Patent Document 5 discloses an image processing apparatus that can use only a part of a region of a display screen as a mirror.

Patent Document 6 discloses a vehicle display device that can display information necessary for driving at a position where a driver's line of sight is naturally directed during driving of a vehicle.

### RELATED DOCUMENT

### PATENT DOCUMENT

Patent Document 1: Japanese Unexamined Patent Publication No. 2021-9234
Patent Document 2: Japanese Unexamined Patent Publication No. 2017-165292
Patent Document 3: Japanese Unexamined Patent Publication No. 2018-69862
Patent Document 4: Japanese Unexamined Patent Publication No. 2017-47868
Patent Document 5: Japanese Unexamined Patent Publication No. 2017-34453
Patent Document 6: Japanese Unexamined Patent Publication No. H1-289725

### SUMMARY OF THE INVENTION

### TECHNICAL PROBLEM

In general, in a case where an electronic mirror that displays an image from a camera mounted on a rear side of a vehicle is adopted, the electronic mirror does not show a state in the vehicle, and thus it is difficult to grasp the state in the vehicle.

For example, in Patent Document 2, a camera is mounted in the vicinity of a side mirror, but it is difficult to understand the state of the rear seat in the vehicle in detail with the electronic mirror. In addition, it is troublesome for the driver to check the state of the rear seat by turning back the head.

In addition, for example, in Patent Document 4, a camera that images the inside of a vehicle and a camera that images a rear side of the vehicle are mounted, but it is troublesome to grasp the state of the inside of the vehicle and the rear side of the vehicle while switching the camera one by one.

An object to be achieved by the present invention is to easily ascertain a state in a vehicle while confirming a situation on the rear side of a vehicle.

### SOLUTION TO PROBLEM

The invention according to Claim 1 is a display control system including
a first imaging unit that images a rear side of a mobile body,
a second imaging unit that images an inside of the mobile body,
a display unit that is provided at a position visually recognizable to a driver of the mobile body, and
a display control unit that displays at least one of a first image generated by using the first imaging unit or a second image generated by using the second imaging unit on the display unit,
in which the display control unit changes a display aspect of the at least one of the first image or the second image according to a predetermined state, and displays both the first image and the second image on the display unit in a case where the predetermined state satisfies a first condition.

The invention according to Claim 14 is an electronic mirror including
a display unit that is provided at a position visually recognizable to a driver of a mobile body, and
a display control unit that displays at least one of a first image generated by using the first imaging unit or a second image generated by using the second imaging unit on the display unit,
in which the display control unit changes a display aspect of the at least one of the first image or the second image according to a predetermined state, and displays both the first image and the second image on the display unit in a case where the predetermined state satisfies a first condition.

The invention according to Claim 16 is a method for controlling a display control system that causes one or more computers realizing the display control system to execute a process including
capturing a rear side of a mobile body,
capturing an inside of the mobile body,
displaying at least one of a first image generated by capturing the rear side of the mobile body or a second image generated by capturing the inside of the mobile body on a display unit at a position visually recognizable to a driver of the mobile body, and
changing a display aspect of the at least one of the first image or the second image in accordance with a predetermined state and displaying both the first image and the second image on the display unit in a case where the predetermined state satisfies a first condition.

The invention according to Claim 17 is a program that causes one or more computers realizing a display control system to execute a process including
a unit that captures a rear side of a mobile body,
a unit that captures an inside of the mobile body,
a unit that displays at least one of a first image generated by capturing the rear side of the mobile body or a second image generated by capturing the inside of the mobile body on a display unit at a position visually recognizable to a driver of the mobile body, and
a unit that changes a display aspect of the at least one of the first image or the second image in accordance with a predetermined state and displays both the first image and the second image on the display unit in a case where the predetermined state satisfies a first condition.

### BRIEF DESCRIPTION OF THE DRAWINGS

[FIG. 1] A block diagram showing a function of a display control system according to a first embodiment.
[FIG. 2] A diagram showing a vehicle that implements a display control system according to the first embodiment.
[FIG. 3] A diagram showing a state in which both a first image and a second image are displayed on a display unit.
[FIG. 4] A diagram showing an example of a hardware configuration of a server.
[FIG. 5] A flowchart in a case where the display control unit according to the first embodiment displays both the first image and the second image on the display unit.
[FIG. 6] A flowchart in a case where the display control unit according to the first embodiment changes a display aspect of the second image.
[FIG. 7] A block diagram showing a function of a display control system according to a second embodiment.
[FIG. 8] A diagram showing a state in which a second image is displayed on a display unit in a small size.
[FIG. 9] A diagram showing a second image in which a passenger is displayed in an emphasized manner.
[FIG. 10] A block diagram showing a function of a display control system according to a fourth embodiment.
[FIG. 11] A diagram showing a state in which a passenger included in a second image is displayed on a display unit in an icon aspect.
[FIG. 12] A diagram showing another aspect of the icon.
[FIG. 13] A block diagram for describing a function of an electronic mirror 1 according to a sixth embodiment.

### DESCRIPTION OF EMBODIMENTS

Hereinafter, an embodiment of the present invention will be described using the drawings. In all drawings, the same components are designated by the same reference numerals, and description thereof will not be repeated as appropriate.

In the following description, each component of each device is represented as a block of a functional unit, not as a hardware unit configuration. Each component of each device is implemented by any combination of software and hardware centering on a CPU, a memory, a program loaded in the memory, a storage medium such as a hard disk for storing the program, and an interface for network connection of any computer. There are various modification examples in an implementation method of the component and the device.

### (First Embodiment)

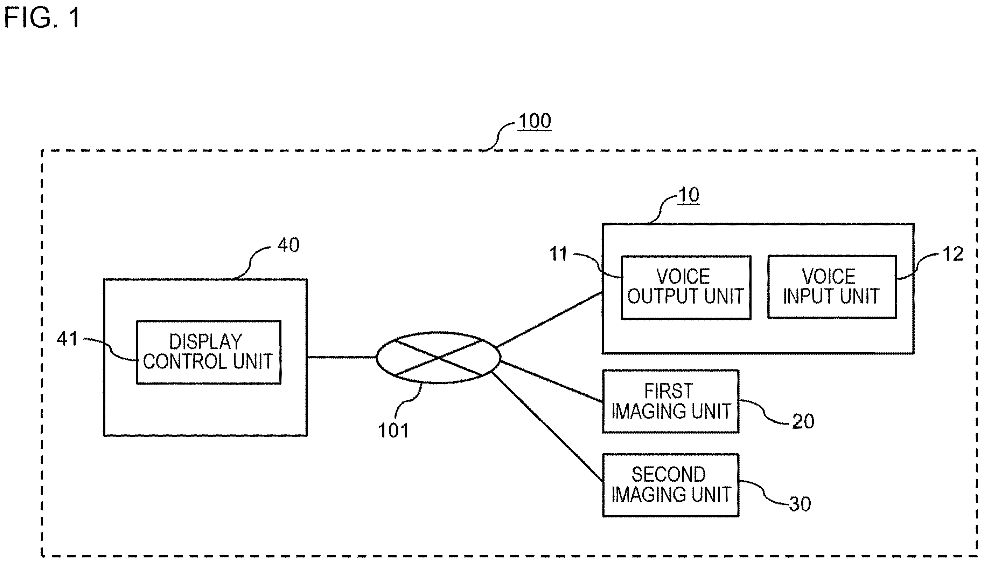

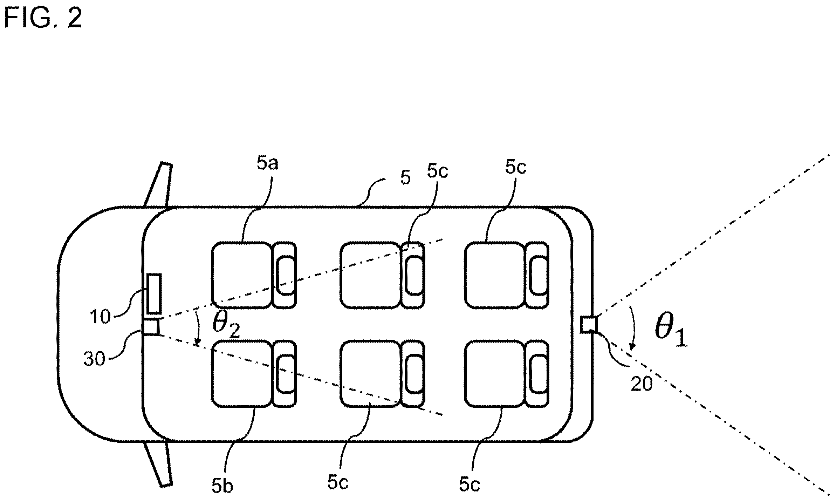

FIG. 1 is a block diagram showing a function of a display control system 100 according to a first embodiment. FIG. 2 is a diagram showing a vehicle 5 that realizes a display control system 100 according to the first embodiment. A display control system 100 according to a first embodiment will be described with reference to FIGS. 1 and 2.

The display control system 100 includes a display unit 10, a first imaging unit 20, a second imaging unit 30, and a server 40. In the first embodiment, the server 40 is provided outside the mobile body. The server 40 may be a so-called cloud server. In the first embodiment, the mobile body is a vehicle 5.

### (First Imaging Unit 20)

As shown in FIG. 2, in the first embodiment, the first imaging unit 20 is provided outside the vehicle. The first imaging unit 20 is provided at a rear side (rear) of the vehicle 5. The first imaging unit 20 may be provided in the vehicle and may be configured to face the outside of the vehicle. The inside of the vehicle (inside the vehicle) is a region where the driver and the passengers are present. The outside of the vehicle is a region outside a body of the vehicle where a driver and passengers of the vehicle are not present.

The first imaging unit 20 images the rear side of the vehicle 5. The first imaging unit 20 images a predetermined range θ₁ centered on the first imaging unit 20. The first imaging unit 20 may be movable or may be swingable about a height direction of the vehicle 5.

The first imaging unit 20 generates a first image. The first image is an image of a rear side of the vehicle captured by the first imaging unit 20. The first image is an image generated by imaging a rear side of the vehicle 5. The first image is an image generated by using the first imaging unit 20 and includes at least one of a still image or a video.

As shown in FIG. 1, the first imaging unit 20 is configured to communicate with the server 40 through a communication network 101. The communication network 101 includes, for example, communication over a 4G or 5G line. The first imaging unit 20 is configured to include an in-vehicle communication unit (not shown) for configuring the communication network 101. The first imaging unit 20 transmits information related to the first image to the server 40.

### (Second Imaging Unit 30)

As shown in FIG. 2, the second imaging unit 30 is provided in the vehicle. The second imaging unit 30 may be brought in from the outside of the vehicle 5 or may be attached to the vehicle 5 in advance. The second imaging unit 30 is provided on, for example, a ceiling of the vehicle 5. The second imaging unit 30 is provided, for example, on a ceiling between a driver's seat 5a and an assistant seat 5b.

The second imaging unit 30 images the inside of the vehicle. The second imaging unit 30 images a predetermined range θ₂ around the second imaging unit 30. For example, the second imaging unit 30 images the inside of the vehicle such that an entire rear seat 5c of the vehicle 5 is imaged. For example, the second imaging unit 30 images the passenger who boards the rear seat 5c. The second imaging unit 30 may be movable or may be swingable about a height direction of the vehicle 5.

The second imaging unit 30 generates a second image. The second image is an image in the vehicle captured by the second imaging unit 30. The second image is an image generated by imaging the inside of the vehicle 5. The second image is an image generated by using the second imaging unit 30, and includes at least one of a still image or a video.

As shown in FIG. 1, the second imaging unit 30 is configured to communicate with the server 40 through the communication network 101. The second imaging unit 30 is configured to include an in-vehicle communication unit (not shown) for configuring the communication network 101. The second imaging unit 30 transmits information related to the second image to the server 40.

### (Display Unit 10)

In the first embodiment, the display unit 10 is a so-called electronic mirror. At least one of the first image or the second image is displayed on the display unit 10. As shown in FIG. 2, the display unit 10 is located at a position visually recognizable to the driver of the vehicle 5. The display unit 10 may be provided, for example, on a ceiling between the driver's seat 5a and the assistant seat 5b. The display unit 10 may be provided, for example, at a position closer to the driver's seat 5a than the assistant seat 5b. The display unit 10 may be provided, for example, at a position closer to the driver's seat 5a than the rear seat 5c.

As shown in FIG. 1, the display unit 10 includes a speaker as a voice output unit 11 and a microphone as a voice input unit 12. The oscillator may be provided inside the display unit 10 (= electronic mirror), and the speaker and the microphone of the display unit 10 may be realized by using the oscillator.

In addition, a microphone (not shown) may be provided near the rear seat 5c, and a voice input to the microphone may be output from the voice output unit 11. In addition, a speaker (not shown) may be provided near the rear seat 5c, and the voice of the driver input to the voice input unit 12 may be output from the speaker. In this way, the driver and the passenger in the rear seat 5c may be configured to communicate with each other through the display unit 10 (= electronic mirror).

As shown in FIG. 1, the display unit 10 is configured to communicate with the server 40 through the communication network 101. The display unit 10 is configured to include an in-vehicle communication unit (not shown) for configuring the communication network 101.

### (Display Control Unit 41)

The server 40 includes a display control unit 41. The display control unit 41 displays at least one of the first image generated by using the first imaging unit 20 or the second image generated by using the second imaging unit 30 on the display unit 10. The display control unit 41 may display only the first image on the display unit 10 or may display only the second image on the display unit 10.

The display control unit 41 changes at least one display aspect of the first image or the second image according to a predetermined state, and displays both the first image and the second image on the display unit 10 in a case where the predetermined state satisfies a first condition.

### (Predetermined State)

The predetermined state includes at least one of a running state of the vehicle 5, a state of the rear side of the vehicle 5, a state of a passenger in the vehicle 5, or a state of the driver.

### (Running State of Vehicle 5)

The running state of the vehicle 5 includes at least one of a state of a speed of the vehicle 5 or a state of a road on which the vehicle 5 is running. The state of the speed of the vehicle 5 includes either a state related to how fast the running speed of the vehicle 5 is or a state related to whether or not the state of the speed of the vehicle 5 is stable. The state of the road on which the vehicle 5 is running includes, for example, at least one state related to whether the vehicle 5 is running on a general road, whether the vehicle 5 is running on an expressway, or how much the limit speed of the road on which the vehicle 5 is running is.

In addition, the running state of the vehicle 5 also includes, for example, a state related to whether or not the vehicle 5 is performing the meandering driving. In addition, the running state of the vehicle 5 (state of the speed of the vehicle 5) includes, for example, a state related to whether the vehicle is stopped or the vehicle 5 is involved in a traffic jam.

### (State of Rear Side of Vehicle 5)

The state of the rear side of the vehicle 5 includes, for example, a state related to whether or not a vehicle other than the vehicle 5 is present behind the vehicle 5. The state of the rear side of the vehicle 5 includes, for example, a state related to whether or not a distance between the vehicle 5 and the vehicle behind is within a predetermined distance. It should be noted that whether or not a vehicle different from the vehicle 5 is present on the rear side of the vehicle 5 and whether or not the distance to the vehicle behind is within a predetermined distance may be determined using at least one of the first image or the traffic information (positional information) of the vehicle.

### (State of Passenger in Vehicle 5)

The state of the passenger in the vehicle 5 includes, for example, at least one of a state related to whether or not the passenger is speaking, a state related to a posture of the passenger (whether the passenger is sleeping or awake), a state related to an expression of the passenger (whether the passenger is laughing or sad), or a state related to a desire of the passenger (whether the passenger wants to go to the toilet or is hungry). For example, the state of the passenger in the vehicle 5 is specified by analyzing the second image.

### (State of Driver)

The state of the driver includes, for example, at least one of a state related to the degree of attention of the driver to the electronic mirror (display unit 10), a state related to the fatigue of the driver, or a state related to the physical condition of the driver.

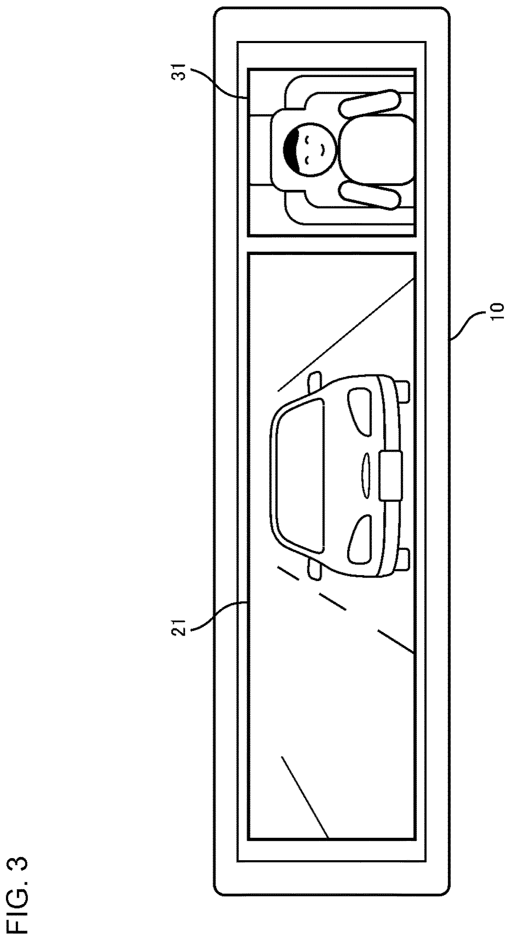

FIG. 3 is a diagram showing a state in which both a first image 21 and a second image 31 are displayed on the display unit 10. The display control unit 41 displays both the first image 21 and the second image 31 on the display unit 10 in a case where the predetermined state satisfies the first condition.

The predetermined state includes at least any one of a case where the engine of the vehicle 5 is started, a case where the passenger speaks a statement, or a case where the passenger does not speak a statement for a predetermined time (for example, 5 minutes) in a case where the predetermined state satisfies the first condition. Whether or not the passenger is speaking may be determined by performing image analysis using the second image, or may be determined by using voice information of the passenger input to the microphone.

### (Hardware Configuration Example)

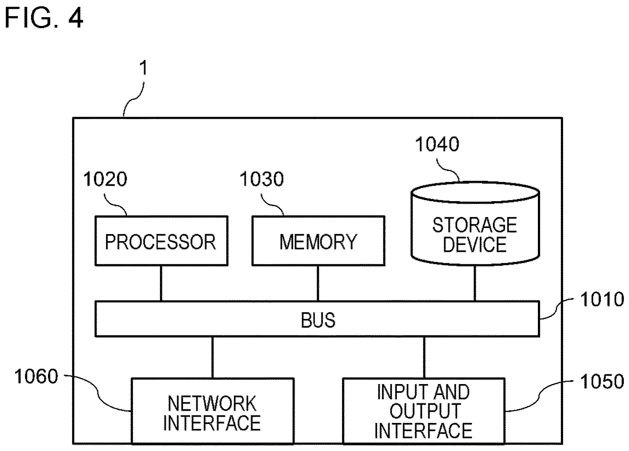

FIG. 4 is a diagram showing an example of a hardware configuration of the server 40. The server 40 includes a bus 1010, a processor 1020, a memory 1030, a storage device 1040, an input and output interface 1050, and a network interface 1060.

The bus 1010 is a data transmission path for transmitting and receiving data between the processor 1020, the memory 1030, the storage device 1040, the input and output interface 1050, and the network interface 1060. However, a method for connecting the processor 1020 or the like is not limited to bus connection.

The processor 1020 is a processor implemented by a central processing unit (CPU), a graphics processing unit (GPU), or the like.

The memory 1030 is a main storage device that is implemented using a random access memory (RAM) or the like.

The storage device 1040 is an auxiliary storage device implemented using a hard disk drive (HDD), a solid state drive (SSD), removable media such as a memory card, a read only memory (ROM), or the like, and has a recording medium. The recording medium of the storage device 1040 stores a program module that realizes each function (for example, the display control unit 41) of the server 40. The processor 1020 reads and executes each of the program modules on the memory 1030, so that each function corresponding to the program module is implemented. In addition, the storage device 1040 may function as a storage unit (not shown) connected to the server 40.

The input and output interface 1050 is an interface for connecting the server 40 and various input/output devices.

The network interface 1060 is an interface for connecting the server 40 to a network. The network is, for example, a local area network (LAN) or a wide area network (WAN). A method for connecting the network interface 1060 to the network may be a wireless connection or a wired connection. The server 40 may communicate with the display unit 10, the first imaging unit 20, and the second imaging unit 30 through the network interface 1060.

It should be noted that, for example, a portion related to communication or control of the display unit 10, the first imaging unit 20, and the second imaging unit 30 may also be implemented by the same hardware configuration as the server 40.

### (Operation Example 1 of First Embodiment)

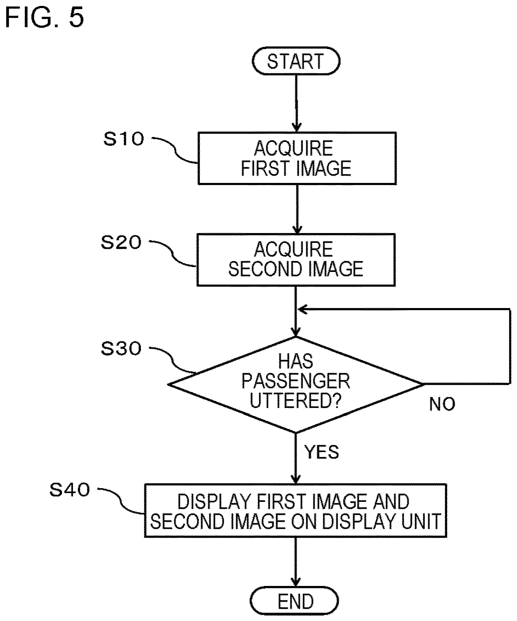

FIG. 5 is a flowchart in a case where the display control unit 41 according to the first embodiment displays both the first image 21 and the second image 31 on the display unit 10.

In step S10, the display control unit 41 (= server 40) acquires information related to the first image from the first imaging unit 20.

In step S20, the display control unit 41 (= server 40) acquires information related to the second image from the second imaging unit 30.

In step S30, the display control unit 41 determines whether or not the passenger in the rear seat 5c has not spoken for a predetermined time. The display control unit 41 may determine whether or not the passenger of the rear seat 5c has spoken using voice information input to a microphone (not shown) mounted in the vicinity of the rear seat 5c. In addition, the display control unit 41 may determine whether or not the passenger of the rear seat 5c has spoken by using the second image.

In a case where the display control unit 41 determines that the passenger of the rear seat 5c has not spoken a word for a predetermined time (YES in step S30), the process proceeds to step S40. In a case where the display control unit 41 determines that the passenger of the rear seat has spoken within the predetermined time (NO in step S30), the process returns to step S30 again, and the process of step S30 is repeated.

Then, in step S40, the display control unit 41 displays both the first image 21 and the second image 31 on the display unit 10. Then, the processing is ended.

In step S30, a flow may be used in which the display control unit 41 determines whether or not the engine of the vehicle 5 is started or whether or not the passenger has not spoken, instead of determining whether or not the passenger of the rear seat 5c has spoken for a predetermined time.

### (Operation Example 2 of First Embodiment)

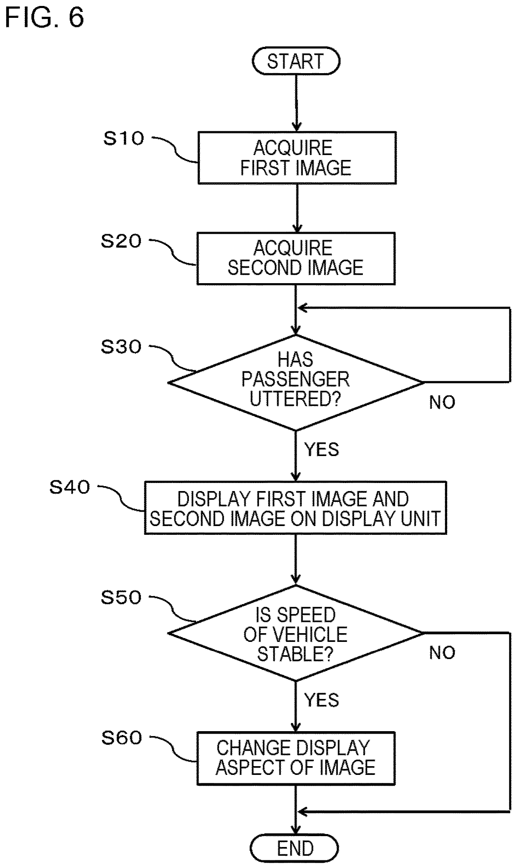

FIG. 6 is a flowchart in a case where the display control unit 41 according to the first embodiment changes the display aspect of the second image 31. In the operation example 2, step S50 and step S60 are added after the flow of the operation example 1.

In step S50 after step S40, the display control unit 41 determines whether or not the state of the speed of the vehicle 5 is stable. Whether or not the state of the speed of the vehicle is stable refers to a state in which the driver drives the vehicle in a range of a predetermined speed for a certain period of time. For example, in a case where the driver is continuously driven in a range of 55 [km/h] to 65 [km/h] for 10 minutes, it is said that the state of the speed of the vehicle is stable. In addition, whether or not the state of the speed of the vehicle is stable may be determined by whether or not the driver drives the vehicle within a predetermined range of acceleration for a certain period of time.

In a case where the display control unit 41 determines that the state of the speed of the vehicle is stable (YES in step S50), the process proceeds to step S60. In a case where the display control unit 41 determines that the state of the speed of the vehicle is not stable (NO in step S50), the processing ends. In a case where the determination result in step S50 is NO, the process may return to step S50 again, and the process of step S50 may be repeated.

In step S60, the display control unit 41 changes the display aspect of the second image 31 such that the size of the second image 31 is larger than the size of the second image 31 in a case where the second image 31 is displayed in step S40. It should be noted that step S50 and step S60 may not be executed after step S40, and may be executed, for example, after step S10 and step S20.

In the first embodiment, the display control system 100 includes the first imaging unit 20, the second imaging unit 30, the display unit 10, and the display control unit 41, and the display control unit 41 displays both the first image 21 and the second image 31 on the display unit 10 in a case where the predetermined state satisfies the first condition.

In a case where the predetermined state satisfies the first condition, both the first image 21 and the second image 31 are displayed on the display unit 10, so that the driver can grasp the state of the back of the vehicle 5 and the state of the passenger in the vehicle 5 in a list on the display unit 10. Further, since the state of the passenger in the vehicle 5 (rear seat) can be grasped without the need to turn back or call out to the passenger in the rear seat, the inconvenience is reduced. Therefore, it is possible to easily grasp the state in the vehicle 5 while checking the situation on the rear side of the vehicle 5 (at the same time as checking).

Further, the display control unit 41 changes a display aspect of at least one of the first image 21 or the second image 31 according to a predetermined state. As a result, the first image 21 and the second image 31 can be effectively displayed on the display unit 10 according to various states (predetermined states).

In addition, the predetermined state includes at least one of a case where the engine of the vehicle 5 is started, a case where the passenger has spoken, or a case where the passenger has not spoken for a predetermined time in a case where the predetermined state satisfies the first condition. For example, in a case where the passenger is not speaking for a predetermined time, there is a concern about whether or not the driver is in poor physical condition. In a case where the passenger is not speaking for a predetermined time (in a case where the predetermined state satisfies the first condition), both the first image 21 and the second image 31 are displayed on the display unit 10, so that the driver can visually recognize the state of the passenger and can easily grasp the state of the passenger. Therefore, the driver can concentrate on driving with peace of mind.

In addition, the predetermined state includes at least one of a running state of the vehicle 5, a state of the rear side of the vehicle 5, a state of a passenger in the vehicle 5, or a state of the driver. Accordingly, the first image 21 and the second image 31 can be effectively displayed on the display unit 10 according to various situations.

In addition, the running state of the vehicle 5 includes at least one of a state of a speed of the vehicle 5 or a state of a road on which the vehicle 5 is running. Accordingly, the first image 21 and the second image 31 can be effectively displayed on the display unit 10 according to various situations related to the speed of the vehicle 5 and the road on which the vehicle 5 travels.

In addition, the display unit 10 includes a speaker and a microphone. Accordingly, the driver can communicate with the passengers in the rear seat through the display unit 10. Further, by mounting a speaker and a microphone on the display unit 10 (electronic mirror) in the visual direction of the driver, the directivity of the spoken voice of the driver can be improved. Therefore, the driver and the rear seat passenger can effectively communicate with each other. In addition, by using a speaker different from the existing speaker, the driver and the passenger can communicate with each other without interfering with the existing speaker system.

### (Second Embodiment)

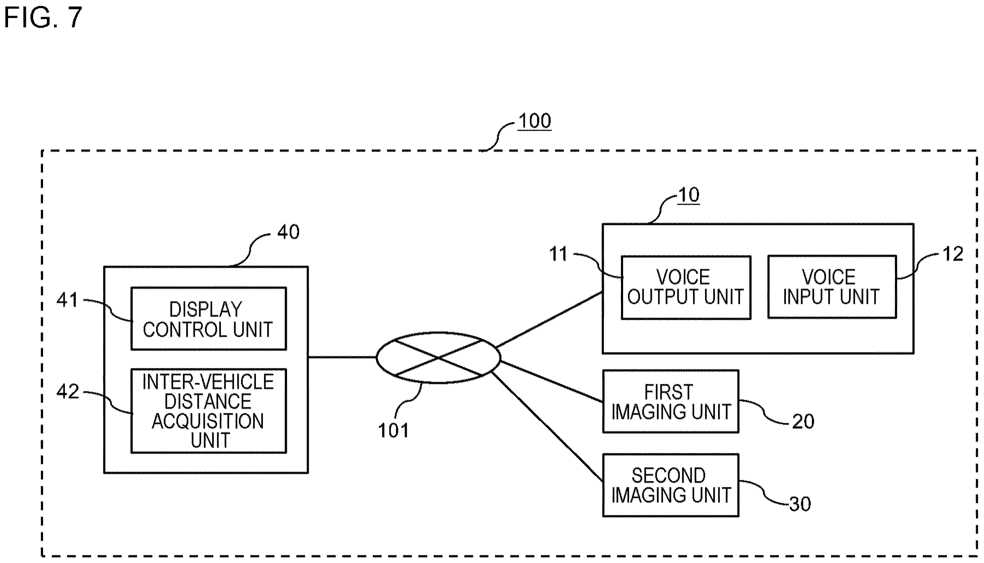

FIG. 7 is a block diagram showing a function of the display control system 100 according to the second embodiment. The server 40 according to the second embodiment further includes an inter-vehicle distance acquisition unit 42, unlike the first embodiment.

The inter-vehicle distance acquisition unit 42 acquires inter-vehicle distance information related to a distance (inter-vehicle distance) between the vehicle 5 and a vehicle on the rear side of the vehicle 5. The inter-vehicle distance acquisition unit 42 may acquire the inter-vehicle distance information through the first imaging unit 20, or may acquire the inter-vehicle distance information by using the position information or the traffic information of the vehicle. The state behind the vehicle 5 in the predetermined state according to the second embodiment includes a state in which the inter-vehicle distance between the vehicle 5 and the vehicle on the rear side of the vehicle 5 is equal to or less than a predetermined distance.

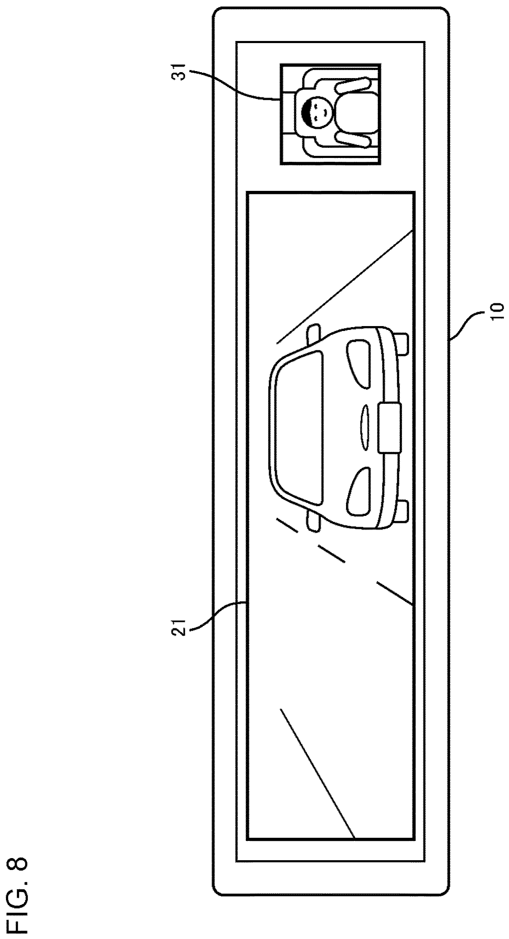

FIG. 8 is a diagram showing a state in which the second image 31 is displayed on the display unit 10 in a small size. In a case where the inter-vehicle distance is equal to or less than the predetermined distance, the display control unit 41 changes the display aspect of the second image 31 such that the size of the second image 31 displayed on the display unit 10 is reduced or the second image 31 is not displayed. The second image 31 in FIG. 8 is displayed smaller on the display unit 10 than the second image 31 in FIG. 3.

In a case where the inter-vehicle distance between the vehicle 5 and the vehicle on the rear side of the vehicle 5 is short (including a case where the vehicle is driven in a threatening manner), the driver must concentrate on driving. By displaying the second image 31 in a small size or not displaying the second image 31, the degree of concentration of the driver on the second image 31 can be reduced. Therefore, the degree of concentration of the driver on the driving is improved.

Further, as another embodiment, the inter-vehicle distance acquisition unit 42 may acquire the rear side vehicle information. The rear side vehicle information is information related to the presence or absence of a vehicle on the rear side of the vehicle 5. The inter-vehicle distance acquisition unit 42 may acquire the rear side vehicle information through the first imaging unit 20, or may acquire the rear side vehicle information by using the vehicle position information or the traffic information. The state behind the vehicle 5 in the predetermined state according to the second embodiment includes a state in which there is no vehicle on the rear side of the vehicle 5.

In a case where there is no vehicle on the rear side of the vehicle 5, the display control unit 41 changes the display aspect of the second image 31 such that the size of the second image 31 displayed on the display unit 10 is increased. In a case where there is no vehicle on the rear side of the vehicle 5, there may be no problem in increasing the degree of concentration on the display unit 10 (= second image 31). In a case where there is no vehicle on the rear side of the vehicle 5, the second image 31 is displayed to be large, and thus it is possible to effectively grasp the situation of the passengers in the rear seat.

The display control unit 41 according to the second embodiment may output a sound effect according to a predetermined state. The display control unit 41 may output a warning sound or may output a warning mark to the display unit 10. For example, in a case where the inter-vehicle distance between the vehicle 5 and the vehicle on the rear side of the vehicle 5 is equal to or less than a predetermined distance, the display control unit 41 may output a warning sound from the speaker. As a result, the driver is likely to notice that the distance to the rear side vehicle is close.

### (Third Embodiment)

The third embodiment is different from the display control unit 41 of the first embodiment in terms of functions. The basic configuration is the same as that in FIG. 1. The state of the passenger in the vehicle 5 in the predetermined state according to the third embodiment includes a state in which the passenger is speaking. In a case where the passenger is speaking, the display control unit 41 according to the third embodiment changes a display aspect of the second image 31 such that a passenger 6 included in the second image 31 is displayed in an emphasized manner.

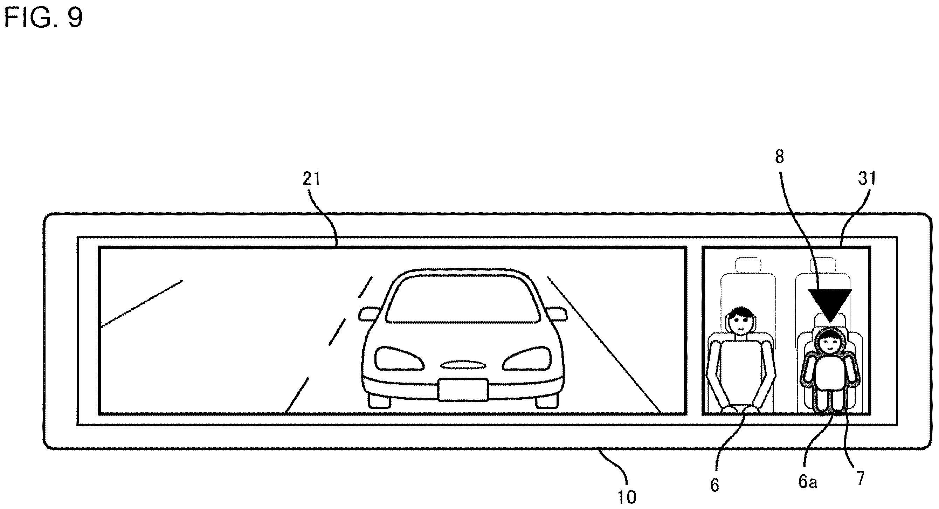

FIG. 9 is a diagram showing the second image 31 in which a passenger 6a is highlighted and displayed. As shown in FIG. 9, the display control unit 41 may display an outer frame 7 of the passenger 6a who is speaking among a plurality of passengers 6 in a thick manner on the display unit 10. In addition, the display control unit 41 may display an emphasis icon 8 for emphasis on the upper side of the speaking passenger 6a. In addition, although not shown, the display control unit 41 may highlight and display the outer frame of the passenger 6a by coloring the outer frame (for example, red).

In this way, the display control unit 41 displays the person who is speaking, the passenger 6a, in a highlighted manner on the second image 31, so that the driver can immediately recognize who is speaking among the plurality of passengers 6.

### (Fourth Embodiment)

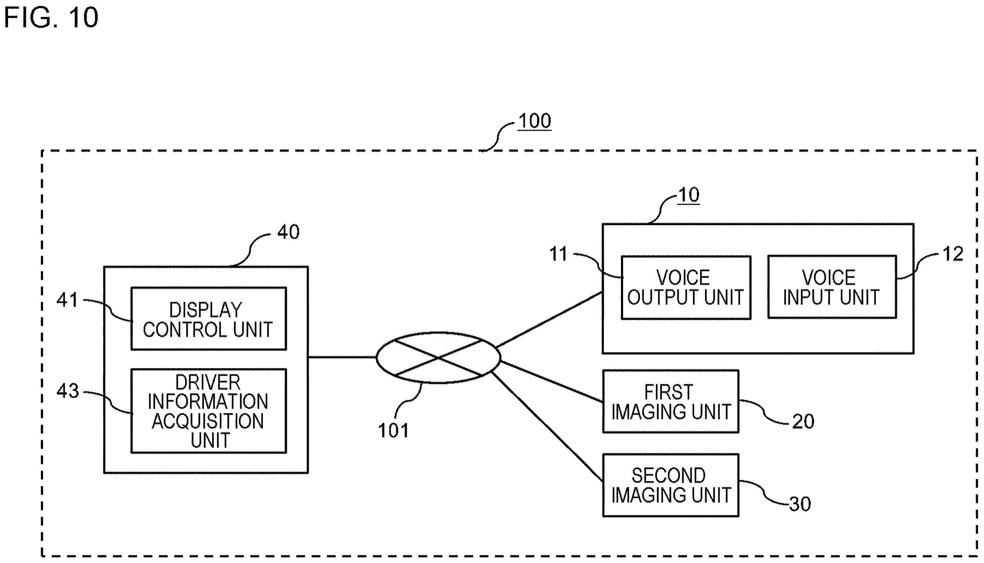

FIG. 10 is a block diagram showing a function of the display control system 100 according to a fourth embodiment. The server 40 according to the fourth embodiment further includes a driver information acquisition unit 43, unlike the first embodiment. The driver information acquisition unit 43 acquires driver state information. The driver state information includes information related to whether or not the attention level of the driver is decreased.

The driver information acquisition unit 43 may acquire the driver state information by performing image analysis (for example, analyzing the driver's visual line) using the camera (or the second imaging unit 30) mounted in the vehicle 5. The driver information acquisition unit 43 may acquire the driver state information by using, for example, vital information (blood pressure, pulse, perspiration amount, and the like) of the driver obtained from an in-vehicle device (a handle, a seat belt, and the like) or a device worn by the driver.

The state of the driver in the predetermined state according to the fourth embodiment includes a state in which the attention level of the driver is decreased. In a case where the attention level of the driver is decreased, the display control unit 41 according to the fourth embodiment changes the display aspect of the second image such that the second image is not displayed. As a result, in a case where the attention level of the driver is decreased, it is possible to suppress the degree of concentration on the second image and concentrate on the first image (image on the rear side of the vehicle). Accordingly, it is possible to suppress a traffic accident.

### (Fifth Embodiment)

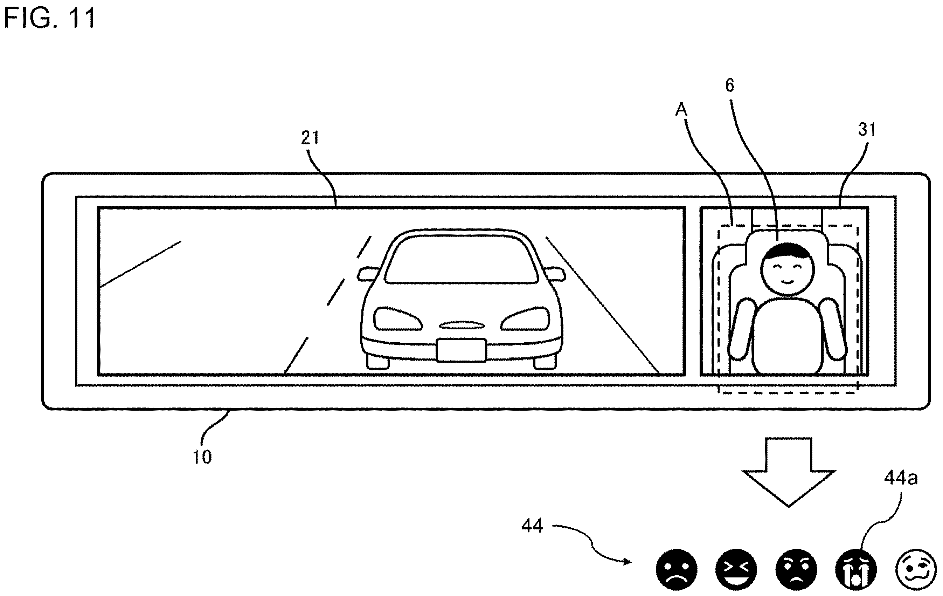

FIG. 11 is a diagram showing a state in which the passenger 6 included in the second image 31 is displayed on the display unit 10 in an icon aspect. The display control unit 41 according to the fifth embodiment displays the passenger 6 included in the second image 31 on the display unit 10 in an icon aspect. An icon 44 represents, for example, an emotion such as joy, anger, sorrow, or pleasure of the passenger 6. The display control unit 41 switches the real image (second image 31) of the passenger 6 to the icon 44, for example, during the running. The display control unit 41 switches, for example, the image of the passenger 6 (see region A in FIG. 11) to at least one of the icons 44. The display control unit 41 may switch only the face portion of the passenger 6 in the image of the passenger 6 to the icon 44, or may switch the entire passenger 6 to the icon 44.

The display control unit 41 changes the icon aspect according to the state of the passenger 6. The state of the passenger includes, for example, a state in which the passenger is pleased, a state in which the passenger is angry, a state in which the passenger is sad, and a state in which the passenger is enjoying. For example, in a case where the passenger 6 is crying, the display control unit 41 may change an icon 44a representing the emotion of sadness.

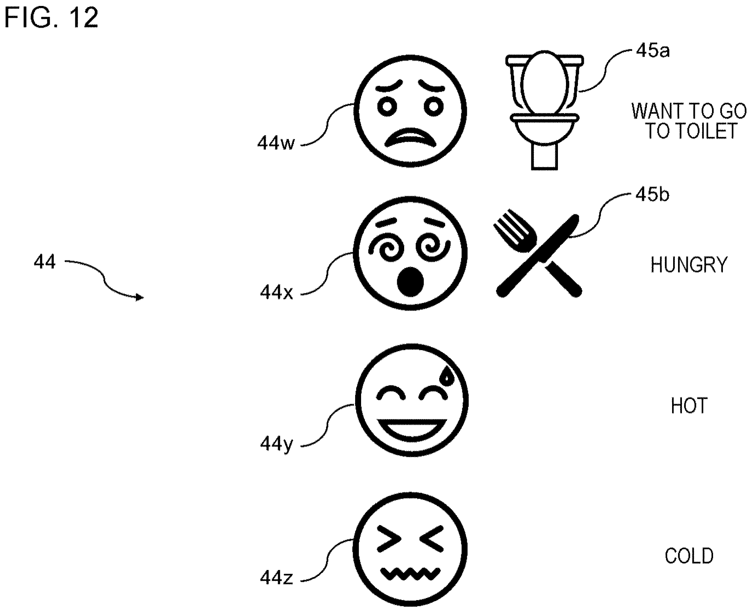

FIG. 12 is a diagram showing another aspect of the icon 44. The icon 44 may be an icon that represents a request of the passenger in addition to representing the joy, anger, sorrow, and pleasure of the passenger. The state of the passenger 6 includes a state in which the passenger 6 wants to go to a toilet, a state in which the passenger is hungry, a state in which the passenger is hot, a state in which the passenger is cold, and the like, in addition to the above-described states of joy, anger, pleasure, and sorrow.

For example, an icon 44w indicates a state in which the passenger 6 wants to go to the toilet, and an icon 44x indicates a state in which the passenger 6 is hungry. In addition to the icon representing the expression, an icon (for example, a toilet icon 45a and a meal icon 45b) suggesting the request of the passenger 6 may be displayed at the same time.

The predetermined state according to the fifth embodiment includes a running state of the vehicle 5. The running state of the vehicle 5 includes a state in which the vehicle 5 is stopped. In a case where the vehicle 5 is stopped, the display control unit 41 changes the display aspect of the second image 31 such that the passenger 6 displayed in the icon aspect is displayed as a real image. The display control unit 41 may determine whether or not the vehicle 5 is stopped based on whether or not the side brake is functioning, or may determine whether or not the vehicle is stopped by detecting the speed of the vehicle.

As described above, according to the fifth embodiment, the display control unit 41 displays the passenger 6 included in the second image 31 on the display unit 10 in the icon aspect. As a result, the concentration degree of the driver on the display unit 10 can be suppressed. Therefore, it is possible to suppress the occurrence of a traffic accident.

Further, the display control unit 41 changes the icon aspect according to the state of the passenger 6. Accordingly, the driver can easily grasp the state of the passenger 6.

Further, in a case where the vehicle 5 is stopped, the display control unit 41 changes the display aspect of the second image 31 such that the passenger 6 displayed in the icon aspect is displayed as a real image. In a case where the vehicle 5 is stopped, there is no problem even in a case where the driver concentrates on viewing the display unit 10 (second image 31). By providing the above-described configuration, the driver can safely grasp the state of the passenger 6.

### (Sixth Embodiment)

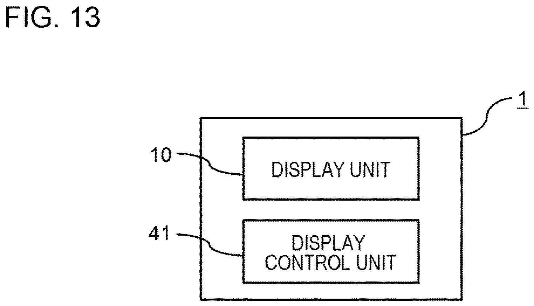

FIG. 13 is a block diagram for describing the functions of an electronic mirror 1 according to the sixth embodiment. The electronic mirror 1 according to the sixth embodiment includes the display unit 10 and the display control unit 41. As in the first embodiment, the display unit 10 is disposed at a position visually recognizable to the driver of the vehicle 5. In the sixth embodiment, the display unit 10 includes a display portion of the electronic mirror 1. As in the first embodiment, the display control unit 41 displays at least one of the first image generated by using the first imaging unit 20 or the second image generated by using the second imaging unit 30 on the display unit 10. As in the first embodiment, the display control unit 41 changes the display aspect of at least one of the first image or the second image according to the predetermined state, and displays both the first image and the second image on the display unit 10 in a case where the predetermined state satisfies the first condition.

The display control unit 41 may be configured to be mounted inside the display unit 10 or may be configured to be mounted outside the display unit 10. In a case where the display control unit 41 is configured to be mounted outside the display unit 10, the display control unit 41 is provided in the vehicle and does not communicate with a server or the like outside the vehicle. The display control unit 41 communicates with the display unit 10, the first imaging unit 20, the second imaging unit 30, and the like mounted on the vehicle.

As described above, according to the sixth embodiment, the electronic mirror 1 can be realized without using the server 40.

In the sixth embodiment, the first imaging unit 20 also images the rear side of the vehicle 5, and the second imaging unit 30 also images the inside of the vehicle 5. Accordingly, it is possible to realize the electronic mirror 1 that can easily grasp the state in the vehicle while checking the situation on the rear side of the vehicle.

### (Modification Example)

As a modification example, the display control unit 41 may detect that the side brake is functioning and may display only the second image on the display unit 10.

In addition, in a case where the vehicle is being provoked (in a case where the inter-vehicle distance is repeatedly decreased and increased), the display control unit 41 may display only the first image on the display unit 10.

In addition, for example, in a case where there are the plurality of passengers 6 in the rear seat, the display control unit 41 may display the passengers 6 one by one on the display unit 10 (second image 31) instead of displaying all the passengers 6 at the same time. In this case, the display control unit 41 may display the passenger 6 by switching for each speaker.

Although the embodiments have been described above with reference to the drawings, these are examples of the present invention, and various configurations other than the above can also be adopted.

The display control unit 41 according to the first embodiment may be included in the display unit 10. In this case, the display control system 100 can be realized even without the server 40.

In addition, the display control system 100 is realized by using one or more computers such as the display unit 10, the first imaging unit 20, the second imaging unit 30, and the server 40. The number of computers used to implement the display control system 100 is optional.

The display unit 10 according to the first embodiment may be a head-up display or a display that can be disposed at a position visually recognizable to the drivers.

Hereinafter, examples of the reference forms will be added.
1. A display control system including
   a first imaging unit that images a rear side of a mobile body,
   a second imaging unit that images an inside of the mobile body,
   a display unit that is provided at a position visually recognizable to a driver of the mobile body, and
   a display control unit that displays at least one of a first image generated by using the first imaging unit or a second image generated by using the second imaging unit on the display unit,
   in which the display control unit changes a display aspect of the at least one of the first image or the second image according to a predetermined state, and displays both the first image and the second image on the display unit in a case where the predetermined state satisfies a first condition.
2. The display control system according to 1.,
   in which the case where the predetermined state satisfies the first condition includes at least one of a case where an engine of the mobile body is started, a case where a passenger in the mobile body is speaking, or a case where the passenger is not speaking for a predetermined time.
3. The display control system according to 1. or 2.,
   in which the predetermined state includes at least one of a running state of the mobile body, a state of the rear side of the mobile body, a state of a passenger in the mobile body, or a state of the driver.
4. The display control system according to 3.,
   in which the running state of the mobile body includes at least one of a state of a speed of the mobile body or a state of a road on which the mobile body is running.
5. The display control system according to 3. or 4.,
   in which the state of the rear side of the mobile body includes a state in which an inter-vehicle distance between the mobile body and a vehicle of the rear side of the mobile body is equal to or less than a predetermined distance, and
   in a case where the inter-vehicle distance is equal to or less than the predetermined distance, the display control unit changes a display aspect of the second image such that a size of the second image displayed on the display unit is reduced or the second image is not displayed.
6. The display control system according to any one of 3. to 5.,
   in which the state of the rear side of the mobile body is a state in which a vehicle is not present on the rear side of the mobile body, and
   in a case where the vehicle is not present on the rear side of the mobile body, the display control unit changes a display aspect of the second image such that a size of the second image displayed on the display unit is increased.
7. The display control system according to any one of 3. to 6.,
   in which the state of the passenger in the mobile body includes a state in which the passenger is speaking, and
   in a case where the passenger is speaking, the display control unit changes a display aspect of the second image such that the passenger included in the second image is displayed in an emphasized manner.
8. The display control system according to any one of 3. to 7.,
   in which the state of the driver includes a state in which alertness of the driver is decreased, and
   in a case where an attention level of the driver is decreased, the display control unit changes a display aspect of the second image such that the second image is not displayed.
9. The display control system according to any one of 1. to 8.,
   in which the display control unit displays a passenger included in the second image on the display unit in an icon aspect.
10. The display control system according to 9.,
   in which the display control unit changes the icon aspect according to a state of the passenger.
11. The display control system according to 9. or 10.,
   in which the predetermined state includes a running state of the mobile body,
   the running state of the mobile body includes a state in which the mobile body is stopped, and
   in a case where the mobile body is stopped, the display control unit changes a display aspect of the second image such that the passenger displayed in the icon aspect is displayed as a real image.
12. The display control system according to any one of 1. to 11.,
   in which the display control unit outputs a sound effect according to the predetermined state.
13. The display control system according to any one of 1. to 12.,
   in which the display unit includes a speaker and a microphone.
14. An electronic mirror including
   a display unit that is provided at a position visually recognizable to a driver of a mobile body, and
   a display control unit that displays at least one of a first image generated by using the first imaging unit or a second image generated by using the second imaging unit on the display unit,
   in which the display control unit changes a display aspect of the at least one of the first image or the second image according to a predetermined state, and displays both the first image and the second image on the display unit in a case where the predetermined state satisfies a first condition.
15. The electronic mirror according to 14.,
   in which the first imaging unit images a rear side of the mobile body, and
   the second imaging unit images an inside of the mobile body.
16. A method for controlling a display control system that causes one or more computers realizing the display control system to execute a process including
   capturing a rear side of a mobile body,
   capturing an inside of the mobile body,
   displaying at least one of a first image generated by capturing the rear side of the mobile body or a second image generated by capturing the inside of the mobile body on a display unit at a position visually recognizable to a driver of the mobile body, and
   changing a display aspect of the at least one of the first image or the second image in accordance with a predetermined state and displaying both the first image and the second image on the display unit in a case where the predetermined state satisfies a first condition.
17. A program that causes one or more computers realizing a display control system to execute a process including
   a unit that captures a rear side of a mobile body,
   a unit that captures an inside of the mobile body,
   a unit that displays at least one of a first image generated by capturing the rear side of the mobile body or a second image generated by capturing the inside of the mobile body on a display unit at a position visually recognizable to a driver of the mobile body, and
   a unit that changes a display aspect of the at least one of the first image or the second image in accordance with a predetermined state and displays both the first image and the second image on the display unit in a case where the predetermined state satisfies a first condition.

The present application claims priority based on Japanese Patent Application No. 2023-018901 filed on February 10, 2023, the entire content of which is incorporated herein by reference.

### REFERENCE SIGNS LIST

1 electronic mirror
5 vehicle
5a driver's seat
5b assistant seat
5c rear seat
6 passenger
10 display unit
20 first imaging unit
21 first image
30 second imaging unit
31 second image
40 server
41 display control unit
42 inter-vehicle distance acquisition unit
43 driver information acquisition unit
44 icon
100 display control system

## Claims

1. A display control system comprising:
a first imaging unit that images a rear side of a mobile body;
a second imaging unit that images an inside of the mobile body;
a display unit that is provided at a position visually recognizable to a driver of the mobile body; and
a display control unit that displays at least one of a first image generated by using the first imaging unit or a second image generated by using the second imaging unit on the display unit,
wherein the display control unit changes a display aspect of the at least one of the first image or the second image according to a predetermined state, and displays both the first image and the second image on the display unit in a case where the predetermined state satisfies a first condition.

2. The display control system according to Claim 1,
wherein the case where the predetermined state satisfies the first condition includes at least one of a case where an engine of the mobile body is started, a case where a passenger in the mobile body is speaking, or a case where the passenger is not speaking for a predetermined time.

3. The display control system according to Claim 1 or 2,
wherein the predetermined state includes at least one of a running state of the mobile body, a state of the rear side of the mobile body, a state of a passenger in the mobile body, or a state of the driver.

4. The display control system according to Claim 3,
wherein the running state of the mobile body includes at least one of a state of a speed of the mobile body or a state of a road on which the mobile body is running.

5. The display control system according to Claim 3,
wherein the state of the rear side of the mobile body includes a state in which an inter-vehicle distance between the mobile body and a vehicle of the rear side of the mobile body is equal to or less than a predetermined distance, and
in a case where the inter-vehicle distance is equal to or less than the predetermined distance, the display control unit changes a display aspect of the second image such that a size of the second image displayed on the display unit is reduced or the second image is not displayed.

6. The display control system according to Claim 3,
wherein the state of the rear side of the mobile body is a state in which a vehicle is not present on the rear side of the mobile body, and
in a case where the vehicle is not present on the rear side of the mobile body, the display control unit changes a display aspect of the second image such that a size of the second image displayed on the display unit is increased.

7. The display control system according to Claim 3,
wherein the state of the passenger in the mobile body includes a state in which the passenger is speaking, and
in a case where the passenger is speaking, the display control unit changes a display aspect of the second image such that the passenger included in the second image is displayed in an emphasized manner.

8. The display control system according to Claim 3,
wherein the state of the driver includes a state in which alertness of the driver is decreased, and
in a case where an attention level of the driver is decreased, the display control unit changes a display aspect of the second image such that the second image is not displayed.

9. The display control system according to Claim 1 or 2,
wherein the display control unit displays a passenger included in the second image on the display unit in an icon aspect.

10. The display control system according to Claim 9,
wherein the display control unit changes the icon aspect according to a state of the passenger.

11. The display control system according to Claim 9,
wherein the predetermined state includes a running state of the mobile body,
the running state of the mobile body includes a state in which the mobile body is stopped, and
in a case where the mobile body is stopped, the display control unit changes a display aspect of the second image such that the passenger displayed in the icon aspect is displayed as a real image.

12. The display control system according to Claim 1 or 2,
wherein the display control unit outputs a sound effect according to the predetermined state.

13. The display control system according to Claim 1 or 2,
wherein the display unit includes a speaker and a microphone.

14. An electronic mirror comprising:
a display unit that is provided at a position visually recognizable to a driver of a mobile body; and
a display control unit that displays at least one of a first image generated by using the first imaging unit or a second image generated by using the second imaging unit on the display unit,
wherein the display control unit changes a display aspect of the at least one of the first image or the second image according to a predetermined state, and displays both the first image and the second image on the display unit in a case where the predetermined state satisfies a first condition.

15. The electronic mirror according to Claim 14,
wherein the first imaging unit images a rear side of the mobile body, and
the second imaging unit images an inside of the mobile body.

16. A method for controlling a display control system that causes one or more computers realizing the display control system to execute a process comprising:
capturing a rear side of a mobile body;
capturing an inside of the mobile body;
displaying at least one of a first image generated by capturing the rear side of the mobile body or a second image generated by capturing the inside of the mobile body on a display unit at a position visually recognizable to a driver of the mobile body; and
changing a display aspect of the at least one of the first image or the second image in accordance with a predetermined state and displaying both the first image and the second image on the display unit in a case where the predetermined state satisfies a first condition.

17. A program that causes one or more computers realizing a display control system to execute a process comprising:
a unit that captures a rear side of a mobile body;
a unit that captures an inside of the mobile body;
a unit that displays at least one of a first image generated by capturing the rear side of the mobile body or a second image generated by capturing the inside of the mobile body on a display unit at a position visually recognizable to a driver of the mobile body; and
a unit that changes a display aspect of the at least one of the first image or the second image in accordance with a predetermined state and displays both the first image and the second image on the display unit in a case where the predetermined state satisfies a first condition.
